# EUROPEAN PATENT APPLICATION

(11) **EP 4 723 259 A1**
(43) Date of publication of application: **08.04.2026**
(21) Application number: 23943442.6
(22) Date of filing: 20.12.2023
(51) Int. Cl.: H01M 10/04

(54) **ADHESIVE TAPE ATTACHING DEVICE AND ADHESIVE TAPE ATTACHING METHOD**

(30) Priority: 29.06.2023 CN 202310785738
(71) Applicant: Contemporary Amperex Technology Co., Limited, Ningde, Fujian 352100 (CN)
(72) Inventor: ZHENG, Zhijian, Ningde, Fujian 352100 (CN); FAN, Xiang, Ningde, Fujian 352100 (CN); NIE, Wenqing, Ningde, Fujian 352100 (CN); HONG, Chang, Ningde, Fujian 352100 (CN); ZHOU, Yuqun, Ningde, Fujian 352100 (CN)
(74) Representative: Kraus & Lederer PartGmbB
(86) International application number: PCT/CN2023/140340
(87) International publication number: WO 2025/000969

(57) **Abstract**

Embodiments of this application disclose an adhesive tape attaching device and an adhesive tape attaching method. The device includes: an adhesive tape attaching assembly, where the adhesive tape attaching assembly includes a first adhesive tape attaching mechanism and a second adhesive tape attaching mechanism; and a control assembly configured to control the adhesive tape attaching assembly to move along a first direction toward a to-be-attached workpiece. The first adhesive tape attaching mechanism is configured to adhere a first portion of an adhesive tape to a region of a first wall of the to-be-attached workpiece close to a second wall of the to-be-attached workpiece, the second adhesive tape attaching mechanism is configured to adhere a second portion of the adhesive tape to a region of the second wall close to the first wall, the first portion is connected to the second portion, and the first wall intersects with the second wall. The adhesive tape attaching device and the adhesive tape attaching method provided by the embodiments of this application can improve adhesive tape attachment efficiency.

## Description

### CROSS-REFERENCE TO RELATED APPLICATIONS

This application claims priority to Chinese Patent Application No. 202310785738.2, filed on June 29, 2023 and entitled "ADHESIVE TAPE ATTACHING DEVICE AND ADHESIVE TAPE ATTACHING METHOD", which is incorporated herein by reference in its entirety.

### TECHNICAL FIELD

This application relates to the field of batteries, and more specifically relates to an adhesive tape attaching device and an adhesive tape attaching method.

### BACKGROUND

Energy conservation and emission reduction are key to the sustainable development of the automotive industry. In this context, electric vehicles have become an important component of the sustainable development of the automotive industry due to their advantages in energy conservation and environmental protection. For electric vehicles, battery technology is a critical factor in connection with their development.

A battery typically includes multiple battery cells, and each battery cell requires a lengthy process and a complex technique for manufacturing. For example, a battery cell is typically provided with an electrode assembly inside. With reference to the processing of the electrode assembly, the processing of the battery cell may include a series of procedures such as electrode coating, electrode forming, electrode assembling, laser welding, and electrolyte injection. Therefore, how to improve the processing efficiency of battery cells is a technical problem that urgently needs to be addressed at present.

### SUMMARY

Embodiments of this application provide an adhesive tape attaching device and an adhesive tape attaching method capable of improving adhesive tape attachment efficiency.

In a first aspect, an adhesive tape attaching device is provided, including: an adhesive tape attaching assembly, where the adhesive tape attaching assembly includes a first adhesive tape attaching mechanism and a second adhesive tape attaching mechanism; and a control assembly, configured to control the adhesive tape attaching assembly to move along a first direction toward a to-be-attached workpiece, where the first adhesive tape attaching mechanism is configured to adhere a first portion of an adhesive tape to a region of a first wall of the to-be-attached workpiece close to a second wall of the to-be-attached workpiece, the second adhesive tape attaching mechanism is configured to adhere a second portion of the adhesive tape to a region of the second wall close to the first wall, the first portion is connected to the second portion, and the first wall intersects with the second wall.

Therefore, in the adhesive tape attaching device of the embodiments of this application, by controlling the entire adhesive tape attaching assembly to move toward the to-be-attached workpiece using the control assembly, the first adhesive tape attaching mechanism and the second adhesive tape attaching mechanism can cooperatively adhere an adhesive tape to an intersecting region of two intersecting walls of the to-be-attached workpiece. There is no need to flip the to-be-attached workpiece, reducing misalignment of the adhesive tape caused by flipping the to-be-attached workpiece; and there is also no need to use multiple devices to work alternately and cooperatively, simplifying the structural complexity of the adhesive tape attaching device.

In some embodiments, the first adhesive tape attaching mechanism includes a floating structure and a first adhesive tape adsorbing structure connected to each other. The floating structure extends along the first direction, the first adhesive tape adsorbing structure is located on a side of the floating structure close to the to-be-attached workpiece, the first adhesive tape adsorbing structure is configured to adsorb the first portion, and the floating structure is configured to be gradually compressed during the movement of the first adhesive tape attaching mechanism along the first direction toward the to-be-attached workpiece, to keep the first adhesive tape adsorbing structure and the first wall to abut against each other. That is, the first adhesive tape adsorbing structure can press the first portion, to tightly adhere the first portion to the region of the first wall close to the second wall, enhancing the adhesion strength between the first portion and the first wall, thereby improving the adhesive tape attachment efficiency and effect.

In some embodiments, the floating structure is configured to be gradually reset during movement of the first adhesive tape attaching mechanism along the first direction away from the to-be-attached workpiece. Since the floating structure can be repeatedly compressed and reset, it can be used in batch processing of to-be-attached workpieces, allowing for adhesive tape attachment for multiple to-be-attached workpieces in sequence.

In some embodiments, the floating structure includes a first spring extending along the first direction, achieving simple structure and easy implementation.

In some embodiments, the first adhesive tape adsorbing structure is a hollow structure. A surface of the first adhesive tape adsorbing structure facing the first wall is a first adhesive tape adsorbing surface, the first adhesive tape adsorbing surface is provided with a first adsorption hole, and the first adsorption hole is used for adsorbing the first portion, for example, adsorbing the first portion to the first wall and adhering the first portion to the first wall. By adsorbing the first portion of the adhesive tape using the first adhesive tape adsorbing surface close to the to-be-attached workpiece, during the process of the first adhesive tape adsorbing structure approaching the first wall, there is no need to flip the first adhesive tape adsorbing structure or the to-be-attached workpiece, facilitating the movement of the first portion and thus improving the adhesive tape attachment efficiency. Additionally, configuring the first adhesive tape adsorbing structure as a hollow structure and providing the first adsorption hole on the first adhesive tape adsorbing surface allows for adjustment and utilization of a pressure difference between the interior and exterior of the first adhesive tape adsorbing structure, to allow the first adhesive tape adsorbing surface to adsorb the first portion, achieving simple structure and easy implementation.

In some embodiments, the first adhesive tape adsorbing surface is parallel to the first wall; and/or, the first adhesive tape adsorbing surface is perpendicular to the first direction. Configuring the first adhesive tape adsorbing surface to be parallel to the first wall ensures that the first portion adsorbed by the first adhesive tape adsorbing surface is also parallel to the first wall during the approach of the first adhesive tape adsorbing surface to the first wall. Thus, when the first portion is adhered to the first wall, different regions of the first portion can be uniformly stressed and adhered to the first wall, improving the flatness of the first portion. Configuring the first adhesive tape adsorbing surface to be perpendicular to the first direction ensures that the first adhesive tape adsorbing surface remains perpendicular to the first direction during the movement of the first adhesive tape adsorbing structure along the first direction, facilitating the adjustment of adhesive tape attaching angle and position.

In some embodiments, the second adhesive tape attaching mechanism includes a rotating structure and a second adhesive tape adsorbing structure. The second adhesive tape adsorbing structure is located on a side of the rotating structure close to the to-be-attached workpiece, the rotating structure is rotatably connected to the second adhesive tape adsorbing structure, and the second adhesive tape adsorbing structure is configured to adsorb the second portion. The second adhesive tape adsorbing structure adsorbs the second portion of the adhesive tape to a region of the second wall close to the first wall. During the movement of the second adhesive tape attaching mechanism along the first direction X toward the to-be-attached workpiece, the second adhesive tape adsorbing structure can rotate relative to the rotating structure, allowing the second adhesive tape adsorbing structure to adhere the second portion to the second wall. This enables the first portion of the adhesive tape to be adhered to the first wall and almost synchronously enables the second portion to be adhered to the second wall without flipping the to-be-attached workpiece, improving the adhesive tape attachment efficiency, thereby improving the processing efficiency of the to-be-attached workpiece and the battery cell.

In some embodiments, the second adhesive tape adsorbing structure is a hollow structure. A surface of the second adhesive tape adsorbing structure facing the to-be-attached workpiece is a second adhesive tape adsorbing surface, the second adhesive tape adsorbing surface is provided with a second adsorption hole, and the second adsorption hole is used for adsorbing the second portion.

The second portion of the adhesive tape is adsorbed using the first adhesive tape adsorbing surface close to the to-be-attached workpiece, so that the adhesive tape can move close to the to-be-attached workpiece almost synchronously with the first adhesive tape adsorbing surface adsorbing the first portion of the adhesive tape, facilitating the overall movement of the adhesive tape and reducing misalignment or wrinkling of the adhesive tape before the adhesive tape is adhered to the to-be-attached workpiece, thereby improving the adhesive tape attachment efficiency. Additionally, configuring the second adhesive tape adsorbing structure as a hollow structure and providing the second adsorption hole on the second adhesive tape adsorbing surface allows for the adjustment and utilization of a pressure difference between the interior and exterior of the second adhesive tape adsorbing structure, to allow the second adhesive tape adsorbing surface to adsorb the second portion, achieving simple structure and easy implementation.

In some embodiments, a surface of the second adhesive tape adsorbing structure facing the first adhesive tape attaching mechanism and intersecting with the second adhesive tape adsorbing surface is an adhesive tape attaching surface, the second adhesive tape adsorbing surface is configured to adsorb the second portion to the to-be-attached workpiece, and the adhesive tape attaching surface is configured to adhere the second portion to the second wall.

Since the second adhesive tape adsorbing structure needs to adhere the second portion to the second wall intersecting with the first wall, configuring the surface intersecting with the second adhesive tape adsorbing surface as the adhesive tape attaching surface can allow the adhesive tape attaching surface to directly adhere the second portion adsorbed by the second adhesive tape adsorbing surface to the second wall without flipping the to-be-attached workpiece during the movement of the second adhesive tape adsorbing structure along the first direction, thereby improving the adhesive tape attachment efficiency.

In some embodiments, the second adhesive tape adsorbing structure includes a protruding structure protruding toward the first adhesive tape attaching mechanism, and the adhesive tape attaching surface includes a surface of the protruding structure facing the first adhesive tape attaching mechanism. The provision of the protruding structure on the second adhesive tape adsorbing structure allows the adhesive tape attaching surface fit more closely to the second wall, facilitating tight attachment of the second portion to the second wall.

In some embodiments, the adhesive tape attaching surface is an arched surface. Since the arched surface is relatively smooth, during the movement of the second adhesive tape adsorbing structure along the first direction, the arched adhesive tape attaching surface moves along the first direction and passes over the second portion, so that the second portion can be adhered to the second wall more uniformly, helping to enhance the adhesion effect, thereby improving the adhesive tape attachment efficiency.

In some embodiments, the second adhesive tape adsorbing surface is parallel to the first wall; and/or, the second adhesive tape adsorbing surface is perpendicular to the first direction. Configuring the second adhesive tape adsorbing surface to be parallel to the first wall ensures that the second portion adsorbed by the second adhesive tape adsorbing surface is also parallel to the first wall during the approach of the second adhesive tape adsorbing surface to the first wall. Thus, when the first adhesive tape adsorbing surface is also parallel to the first wall, both the first portion and the second portion are parallel to the first wall, so that the first portion and the second portion can approach the to-be-attached workpiece smoothly, reducing wrinkling of the adhesive tape. Configuring the second adhesive tape adsorbing surface to be perpendicular to the first direction ensures that the second adhesive tape adsorbing surface remains perpendicular to the first direction during the movement of the second adhesive tape adsorbing surface along the first direction toward the to-be-attached workpiece, facilitating the adjustment of adhesive tape attaching angle and position.

In some embodiments, the adhesive tape attaching device includes two adhesive tape attaching assemblies. The control assembly is configured to simultaneously control the two adhesive tape attaching assemblies to move along the first direction toward the to-be-attached workpiece. The to-be-attached workpiece includes two second walls intersecting with and disposed opposite the first wall. The two first adhesive tape attaching mechanisms included in the two adhesive tape attaching assemblies are configured to adhere the first portions of two adhesive tapes respectively to two regions of the first wall close to the two second walls, and the two second adhesive tape attaching mechanisms included in the two adhesive tape attaching assemblies are configured to adhere the second portions of the two adhesive tapes respectively to the two second walls. Considering that the to-be-attached workpiece may be a symmetrical structure, for the first wall, it is typically necessary to respectively adhere adhesive tapes to two opposite ends of the first wall to enhance the overall stability of the to-be-attached workpiece. Therefore, by simultaneously controlling the two adhesive tape attaching assemblies to adhere two adhesive tapes to the first wall and the two second walls using the control assembly, the adhesive tape attachment efficiency and effect of the two adhesive tapes can be improved, thereby improving the overall adhesive tape attachment efficiency and processing efficiency of the to-be-attached workpiece.

In some embodiments, the control assembly is further configured to: control the two adhesive tape attaching assemblies to move toward and/or away from each other along a second direction, where the second direction is perpendicular to the first direction. Considering that to-be-attached workpieces of different models or types have varying dimensions, to improve the processing efficiency for various to-be-attached workpieces and make the device applicable to more processing scenarios, the control assembly of the device can control the two adhesive tape attaching assemblies to move along the second direction to allow the two adhesive tape attaching assemblies to move toward and/or away from each other, so as to adjust a distance between the two adhesive tape attaching assemblies to match a dimension of the first wall of the to-be-attached workpiece along the second direction.

In a second aspect, an adhesive tape attaching method is provided, including: controlling an adhesive tape attaching assembly to move along a first direction toward a to-be-attached workpiece, adhering a first portion of an adhesive tape to a region of a first wall of the to-be-attached workpiece close to a second wall of the to-be-attached workpiece using a first adhesive tape attaching mechanism of the adhesive tape attaching assembly, and adhering a second portion of the adhesive tape to a region of the second wall close to the first wall using a second adhesive tape attaching mechanism of the adhesive tape attaching assembly, where the first portion is connected to the second portion, and the first wall intersects with the second wall.

In some embodiments, the adhering a first portion of an adhesive tape to a region of a first wall of the to-be-attached workpiece close to a second wall of the to-be-attached workpiece using a first adhesive tape attaching mechanism of the adhesive tape attaching assembly includes: compressing a floating structure of the first adhesive tape attaching mechanism and keeping a first adhesive tape adsorbing structure of the first adhesive tape attaching mechanism to abut against the first wall to adhere the first portion to the first wall.

In some embodiments, the adhering a second portion of the adhesive tape to a region of the second wall close to the first wall using a second adhesive tape attaching mechanism of the adhesive tape attaching assembly includes: rotating a second adhesive tape adsorbing structure of the second adhesive tape attaching mechanism using a rotating structure of the second adhesive tape attaching mechanism to adhere the second portion to the second wall.

In some embodiments, the adhesive tape attaching method further includes: controlling the adhesive tape attaching assembly to move along the first direction X away from the to-be-attached workpiece.

In some embodiments, the to-be-attached workpiece includes two second walls intersecting with and disposed opposite the first wall, and the controlling an adhesive tape attaching assembly to move along a first direction toward a to-be-attached workpiece, adhering a first portion of an adhesive tape to a region of a first wall of the to-be-attached workpiece close to a second wall of the to-be-attached workpiece using a first adhesive tape attaching mechanism of the adhesive tape attaching assembly, and adhering a second portion of the adhesive tape to a region of the second wall close to the first wall using a second adhesive tape attaching mechanism of the adhesive tape attaching assembly includes: simultaneously controlling two adhesive tape attaching assemblies to move along the first direction toward the to-be-attached workpiece, adhering the first portions of two adhesive tapes respectively to two regions of the first wall close to the two second walls using two first adhesive tape attaching mechanisms included in the two adhesive tape attaching assemblies, and adhering the second portions of the two adhesive tapes respectively to the two second walls using two second adhesive tape attaching mechanisms included in the two adhesive tape attaching assemblies.

In some embodiments, the adhesive tape attaching method further includes: controlling the two adhesive tape attaching assemblies to move toward and/or away from each other along a second direction, where the second direction is perpendicular to the first direction.

In the method of the embodiments of this application, by controlling the entire adhesive tape attaching assembly to move toward the to-be-attached workpiece, the first adhesive tape attaching mechanism can adhere the first portion of the adhesive tape to the first wall, and the second adhesive tape attaching mechanism can adhere the second portion of the adhesive tape to the second wall, such that the adhesive tape is adhered to an intersecting region of two intersecting walls of the to-be-attached workpiece. In this process, there is no need to flip the to-be-attached workpiece, reducing misalignment of the adhesive tape caused by flipping the to-be-attached workpiece; and there is also no need to use multiple adhesive tape attaching devices to work alternately and cooperatively, simplifying the overall structural complexity of a system for assembling battery cells.

### BRIEF DESCRIPTION OF DRAWINGS

FIG. 1 is a schematic structural diagram of a to-be-attached workpiece according to an embodiment of this application;
FIG. 2 is a schematic structural diagram of an adhesive tape attaching device according to an embodiment of this application;
FIG. 3 is a schematic partial structural diagram of an adhesive tape attaching device from another perspective according to an embodiment of this application;
FIG. 4 is a schematic enlarged partial structural diagram of an adhesive tape attaching device according to an embodiment of this application;
FIG. 5 is another schematic structural diagram of an adhesive tape attaching device according to an embodiment of this application;
FIG. 6 to FIG. 11 are several schematic partial structural diagrams of an adhesive tape attaching device and a to-be-attached device according to an embodiment of this application;
FIG. 12 is a schematic structural exploded view of a battery cell according to an embodiment of this application; and
FIG. 13 is a schematic flowchart of an adhesive tape attaching method according to an embodiment of this application.

### Description of reference numerals:

1. adhesive tape attaching device; 11. adhesive tape attaching assembly; 111. first adhesive tape attaching mechanism; 1111. floating structure; 1112. first adhesive tape adsorbing structure; 1113. first spring; 1114. first adhesive tape adsorbing surface; 1115. first adsorption hole; 1116. first interface; 112. second adhesive tape attaching mechanism; 1121. rotating structure; 1122. second adhesive tape adsorbing structure; 1123. rotating shaft; 1124. second spring; 1125. second adhesive tape adsorbing surface; 1126. adhesive tape attaching surface; 1127. protruding structure; 1128. second adsorption hole; 1129. second interface; 12. control assembly; 121. first control component; 122. second control component; 20. battery cell; 21. housing; 211. shell; 2111. opening; 212. end cover; 214. electrode terminal; 22. electrode assembly; 221. main body; 222. tab; 223. first end surface; 224. second end surface; 23. insulating layer; 24. connecting member; 30. adhesive tape; 31. first portion; 32. second portion; 40. to-be-attached workpiece; 41. first wall; and 42. second wall.

### DESCRIPTION OF EMBODIMENTS

The technical solutions in the embodiments of this application are described below with reference to the drawings.

To make the objectives, technical solutions, and advantages of the embodiments of this application clearer, the technical solutions in the embodiments of this application are clearly described below with reference to the drawings in the embodiments of this application. Obviously, the described embodiments are some embodiments rather than all embodiments of this application. Based on the embodiments in this application, all other embodiments obtained by persons of ordinary skill in the art without creative effort fall within the protection scope of this application.

Unless otherwise defined, all technical and scientific terms used in this application have the same meaning as commonly understood by those skilled in the technical field of this application. The terms used in the specification of this application are for the purpose of describing specific embodiments only and are not intended to limit this application. The terms "include", "comprise", and any variations thereof in the specification, claims, and descriptions of the drawings of this application are intended to cover non-exclusive inclusion. The terms "first", "second", and the like in the specification, claims, or descriptions of the drawings of this application are used to distinguish different objects rather than to describe a specific order or primary-secondary relationship.

Reference to "embodiment" in this application means that a specific feature, structure, or characteristic described in connection with this embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in this application can be combined with other embodiments.

In the description of this application, it should be noted that, unless otherwise clearly specified and limited, the terms "mounting", "connection", "join", and "attachment" should be understood in a broad sense. For example, they may be a fixed connection, a detachable connection, or an integral connection; and they may be a direct connection, an indirect connection through an intermediate medium, or an internal communication between two elements. For those of ordinary skill in the art, the specific meanings of the above terms in this application can be understood based on specific circumstances.

The term "and/or" in this application is merely an association relationship describing associated objects, indicating that three relationships may exist. For example, A and/or B may indicate: only A is present, both A and B are present, or only B is present. Additionally, the character "/" in this application generally indicates an "or" relationship between the contextually associated objects.

In the embodiments of this application, the same reference numerals denote the same components, and for brevity, detailed descriptions of the same components are omitted in different embodiments. It should be understood that the dimensions such as thickness, length, and width of various components in the embodiments of this application shown in the drawings, as well as the dimensions such as the overall thickness, length, and width of integrated apparatuses, are for illustrative purposes only and should not impose any limitations on this application.

The term "multiple" in this application refers to two or more (including two). Similarly, "multiple groups" refers to two or more groups (including two groups), and "multiple pieces" refers to two or more pieces (including two pieces).

In this application, a battery cell may be a lithium-ion battery, a lithium-sulfur battery, a sodium-lithium-ion battery, a sodium-ion battery, a magnesium-ion battery, or the like, which is not limited in the embodiments of this application. The battery cell may be cylindrical, flat, cuboidal, or of other shapes, which is also not limited in the embodiments of this application. Battery cells are generally divided into three types based on packaging methods: cylindrical battery cells, prismatic battery cells, and pouch battery cells, which is also not limited in the embodiments of this application.

The battery mentioned in the embodiments of this application refers to a single physical module including one or more battery cells to provide higher voltage and capacity. For example, the battery mentioned in this application may include a battery module, a battery pack, or the like. The battery generally includes a box for encapsulating one or more battery cells. The box can prevent liquids or other foreign objects from affecting the charging or discharging of the battery cells.

The battery cell includes an electrode assembly and an electrolyte. The electrode assembly includes a cathode plate, an anode plate, and a separator. The battery cell operates primarily by the movement of metal ions between the cathode plate and the anode plate. During the charging and discharging of the battery cell, active ions (for example, lithium ions) intercalate and deintercalate back and forth between a positive electrode and a negative electrode. The separator is disposed between the positive electrode and the negative electrode to prevent short-circuiting between the positive and negative electrodes while allowing active ions to pass through.

The development of battery technology needs to consider multiple design factors simultaneously, for example, performance parameters such as energy density, cycle life, discharge capacity, and charge/discharge rate. Additionally, the processing efficiency and yield rate of batteries also need to be considered. For example, the processing efficiency of batteries can be improved by improving the processing efficiency of battery cells.

The production process of battery cells is highly complex, for example, typically including processing and assembly of electrode assemblies, assembly between electrode assemblies and end covers, assembly between electrode assemblies and shells, and assembly between shells and end covers. Therefore, the processing efficiency of an electrode assembly inside a battery cell can restrict the processing efficiency of the battery cell, and the production efficiency of the battery cell further restricts the production efficiency of the battery. During the processing of a battery cell, it is usually necessary to attach adhesive tapes to components inside the battery cell. For example, an outer surface of an electrode assembly is typically wrapped with an insulating layer, and an adhesive tape may need to be attached to an edge of this insulating layer to ensure that the insulating layer can effectively isolate the electrode assembly. During an adhesive tape attachment process for the electrode assembly, it is usually necessary to adhere a same adhesive tape to two intersecting walls. Therefore, how to quickly complete the adhesive tape attachment process and effectively improve the adhesive tape attachment efficiency of the electrode assembly to further improve the production efficiency and product yield of battery cells and batteries is one of the important issues in the field of batteries.

Therefore, the adhesive tape attaching device and adhesive tape attaching method of the embodiments of this application can address the above issues. The adhesive tape attaching device of the embodiments of this application includes an adhesive tape attaching assembly and a control assembly, where the control assembly may be configured to control the adhesive tape attaching assembly to move along a first direction toward a to-be-attached workpiece. Specifically, the adhesive tape attaching assembly includes a first adhesive tape attaching mechanism and a second adhesive tape attaching mechanism. When the control assembly controls the adhesive tape attaching assembly to move along the first direction toward the to-be-attached workpiece, the first adhesive tape attaching mechanism adheres a first portion of the adhesive tape to a region of a first wall of the to-be-attached workpiece close to a second wall, and the second adhesive tape attaching mechanism adheres a second portion of the adhesive tape to a region of the second wall of the to-be-attached workpiece close to the first wall, where the first portion and the second portion are adjacent to each other, and the first wall intersects with the second wall. In this way, by controlling the entire adhesive tape attaching assembly to move toward the to-be-attached workpiece using the control assembly, the first adhesive tape attaching mechanism and the second adhesive tape attaching mechanism can cooperatively adhere an adhesive tape to an intersecting region of two intersecting walls of the to-be-attached workpiece. There is no need to flip the to-be-attached workpiece, reducing misalignment of the adhesive tape caused by flipping the to-be-attached workpiece; and there is also no need to use multiple adhesive tape attaching devices to work alternately and cooperatively, simplifying the structural complexity of the adhesive tape attaching device. This adhesive tape attaching device is suitable for adhering an adhesive tape to any to-be-attached workpiece, and the to-be-attached workpiece may be any component, achieving application in flexible and wide-ranging scenarios.

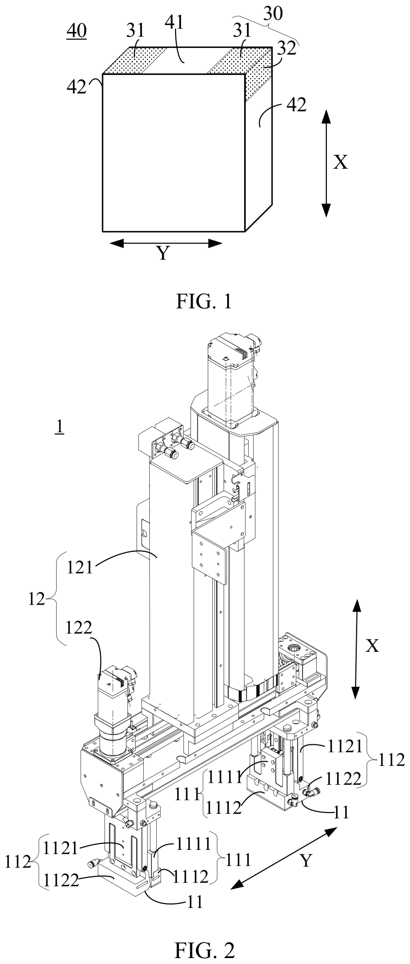

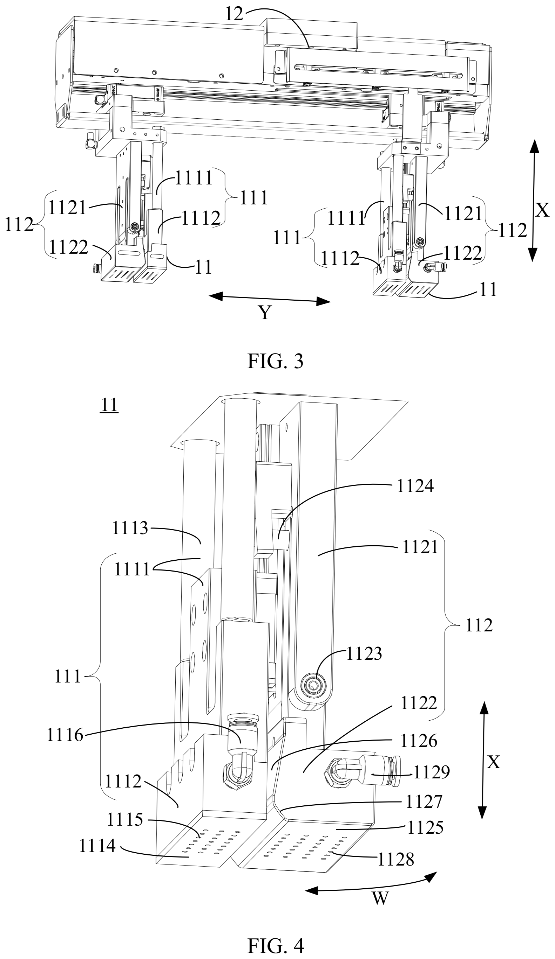

FIG. 1 shows a schematic structural diagram of a to-be-attached workpiece 40 according to an embodiment of this application; FIG. 2 shows a schematic structural diagram of an adhesive tape attaching device 1 according to an embodiment of this application; FIG. 3 shows a schematic partial structural diagram of the adhesive tape attaching device 1 from another perspective according to an embodiment of this application, for example, the adhesive tape attaching device 1 shown in FIG. 3 may be a schematic diagram of the adhesive tape attaching device 1 shown in FIG. 2 from another perspective; and FIG. 4 shows a schematic enlarged view of a partial structure of the adhesive tape attaching device 1 according to an embodiment of this application, for example, FIG. 4 may be a schematic enlarged view of an adhesive tape attaching assembly 11 included in the adhesive tape attaching device 1 shown in FIG. 3.

As shown in FIG. 1 to FIG. 4, the adhesive tape attaching device 1 of these embodiments of this application may include: an adhesive tape attaching assembly 11, where the adhesive tape attaching assembly 11 includes a first adhesive tape attaching mechanism 111 and a second adhesive tape attaching mechanism 112; and a control assembly 12, configured to control the adhesive tape attaching assembly 11 to move along a first direction X toward a to-be-attached workpiece 40. The first adhesive tape attaching mechanism 111 is configured to adhere a first portion 31 of an adhesive tape 30 to a region of a first wall 41 of the to-be-attached workpiece 40 close to a second wall 42 of the to-be-attached workpiece 40. The second adhesive tape attaching mechanism 112 is configured to adhere a second portion 32 of the adhesive tape 30 to a region of the second wall 42 close to the first wall 41. The first portion 31 is connected to the second portion 32, and the first wall 41 intersects with the second wall 42.

It should be understood that the to-be-attached workpiece 40 in these embodiments of this application may be any component. The to-be-attached workpiece 40 includes multiple walls, where the first wall 41 and the second wall 42 may be any two intersecting walls of the to-be-attached workpiece 40. The shapes and dimensions of the first wall 41 and the second wall 42 may be flexibly set based on actual applications, for example, the shapes of the first wall 41 and the second wall 42 may be the same or different, and the dimensions of the first wall 41 and the second wall 42 may also be the same or different. The embodiments of this application are not limited thereto.

In the adhesive tape attaching device 1 of these embodiments of this application, by controlling the entire adhesive tape attaching assembly 11 to move toward the to-be-attached workpiece 40 using the control assembly 12, the first adhesive tape attaching mechanism 111 and the second adhesive tape attaching mechanism 112 can cooperatively adhere an adhesive tape 30 to an intersecting region of two intersecting walls of the to-be-attached workpiece 40. There is no need to flip the to-be-attached workpiece 40, reducing misalignment of the adhesive tape caused by flipping the to-be-attached workpiece 40; and there is also no need to use multiple devices to work alternately and cooperatively, simplifying the structural complexity of the adhesive tape attaching device 1. Additionally, this adhesive tape attaching device 1 can be suitable for adhering an adhesive tape to any to-be-attached workpiece 40, and the to-be-attached workpiece 40 may be any component, achieving application in flexible and wide-ranging scenarios.

In these embodiments of this application, the to-be-attached workpiece 40 may include one or more intersecting regions to which an adhesive tape 30 needs to be attached. For example, as shown in FIG. 1, the to-be-attached workpiece 40 may include multiple intersecting regions to which an adhesive tape 30 needs to be attached, and to improve the adhesive tape attachment efficiency, multiple adhesive tape attaching assemblies 11 may be used correspondingly.

In some embodiments, as shown in FIG. 1 to FIG. 4, the adhesive tape attaching device 1 of these embodiments of this application includes two adhesive tape attaching assemblies 11, the control assembly 12 is configured to simultaneously control the two adhesive tape attaching assemblies 11 to move along the first direction X toward the to-be-attached workpiece 40, and the to-be-attached workpiece 40 includes two second walls 42 intersecting with and disposed opposite the first wall 41. The two first adhesive tape attaching mechanisms 111 included in the two adhesive tape attaching assemblies 11 are configured to adhere the first portions 31 of two adhesive tapes 30 respectively to two regions of the first wall 41 close to the two second walls 42, and the two second adhesive tape attaching mechanisms 112 included in the two adhesive tape attaching assemblies 11 are configured to adhere the second portions 32 of the two adhesive tapes 30 respectively to the two second walls 42.

Considering that the to-be-attached workpiece 40 may be a symmetrical structure, for the first wall 41, it is typically necessary to respectively adhere adhesive tapes 30 to two opposite ends of the first wall 41 to enhance the overall stability of the to-be-attached workpiece 40. Therefore, by simultaneously controlling the two adhesive tape attaching assemblies 11 to adhere two adhesive tapes 30 to the first wall 41 and the two second walls 42 using the control assembly 12, the adhesive tape attachment efficiency and effect of the two adhesive tapes 30 can be improved, thereby improving the overall adhesive tape attachment efficiency and processing efficiency of the to-be-attached workpiece 40.

Specifically, as shown in FIG. 1 to FIG. 4, during the process of the control assembly 12 controlling the two adhesive tape attaching assemblies 11 to move along the first direction X toward the to-be-attached workpiece 40, the two first adhesive tape attaching mechanisms 111 included in the two adhesive tape attaching assemblies 11 can move substantially synchronously to respectively adhere the first portions 31 of the two adhesive tapes as synchronously as possible to two opposite regions of the first wall 41; and correspondingly, the two second adhesive tape attaching mechanisms 112 included in the two adhesive tape attaching assemblies 11 can also move substantially synchronously to respectively adhere the second portions 32 of the two adhesive tapes as synchronously as possible to the corresponding regions of the two second walls 42 intersecting with and disposed opposite the first wall 41, thereby improving the adhesive tape attachment efficiency and symmetrical attachment effect of the two adhesive tapes 30.

In some embodiments, the control assembly 12 is further configured to: control the two adhesive tape attaching assemblies 11 to move toward and/or away from each other along a second direction Y, where the second direction Y is perpendicular to the first direction X. Considering that to-be-attached workpieces 40 of different models or types have varying dimensions, to improve the processing efficiency for various to-be-attached workpieces 40 and make the adhesive tape attaching device 1 applicable to more processing scenarios, the control assembly 12 of the adhesive tape attaching device 1 can control the two adhesive tape attaching assemblies 11 to move along the second direction Y to allow the two adhesive tape attaching assemblies 11 to move toward and/or away from each other, so as to adjust a distance between the two adhesive tape attaching assemblies 11 to match a dimension of the to-be-attached workpiece 40 along the second direction Y.

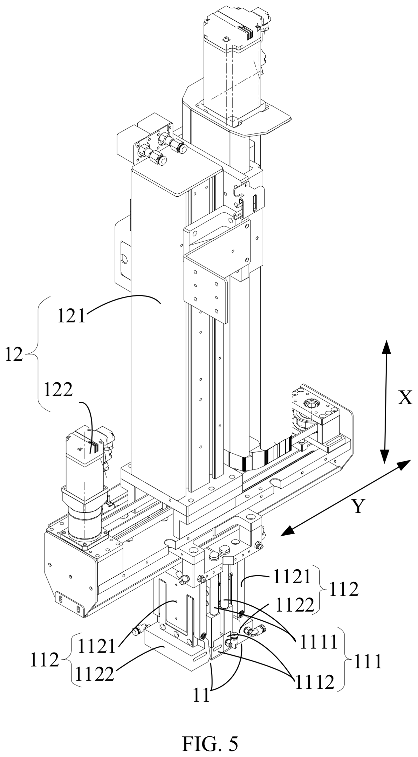

FIG. 5 shows a schematic structural diagram of an adhesive tape attaching device 1 in another state according to an embodiment of this application. Based on comparison between FIG. 5 and FIG. 2, when the adhesive tape attaching device 1 is not in use, the control assembly 12 may be used to control the two adhesive tape attaching assemblies 11 of the adhesive tape attaching device 1 to move toward each other along the second direction Y, for example, to reduce space occupied by the adhesive tape attaching device 1 as shown in FIG. 5. When the adhesive tape attaching device 1 is needed for attaching an adhesive tape, the control assembly 12 can control the two adhesive tape attaching assemblies 11 to move away from each other along the second direction Y as shown in FIG. 3, so that dimensions of the two adhesive tape attaching assemblies 11 along the second direction Y fit adhesive tape attaching positions of the to-be-attached workpieces 40, and then the adhesive tape is attached. When the to-be-attached workpieces 40 have different dimensions, the control assembly 12 can adjust a distance between the two adhesive tape attaching assemblies 11 along the second direction Y based on the different dimensions of the to-be-attached workpieces 40, making the adhesive tape attaching device 1 suitable for the processing of the to-be-attached workpieces 40 of various dimensions.

In some embodiments, the control assembly 12 may include a first control component 121. The first control component 121 may be configured to control the adhesive tape attaching assembly 11 to move along the first direction X. For example, the first control component 121 may include a lifting apparatus to control the adhesive tape attaching assembly 11 to move close to or away from the to-be-attached workpiece 40 along the first direction X. Additionally, if the adhesive tape attaching device 1 includes multiple adhesive tape attaching assemblies 11, and the first control component 121 may be configured to control the multiple adhesive tape attaching assemblies 11 to move along the first direction X.

In some embodiments, the control assembly 12 may further include a second control component 122. The second control component 122 may be configured to control multiple adhesive tape attaching assemblies 11 to move toward or away from each other. For example, if the adhesive tape attaching device 1 includes two adhesive tape attaching assemblies 11. The second control component 122 may be configured to control the two adhesive tape attaching assemblies 11 to move along the second direction Y. For example, the second control component 122 may include a servo motor to control the two adhesive tape attaching assemblies 11 to move along the second direction Y, allowing the two adhesive tape attaching assemblies 11 to move toward and/or away from each other.

The adhesive tape attaching assembly 11 of these embodiments of this application is described in detail below with reference to the drawings. For example, as shown in FIG. 4, the adhesive tape attaching assembly 11 may refer to any one of the adhesive tape attaching assemblies 11 included in the adhesive tape attaching device 1, and the multiple adhesive tape attaching assemblies 11 included in the adhesive tape attaching device 1 may have the same structure, but the embodiments of this application are not limited thereto.

In these embodiments of this application, the first adhesive tape attaching mechanism 111 includes a floating structure 1111 and a first adhesive tape adsorbing structure 1112 connected to each other. The floating structure 1111 extends along the first direction X, the first adhesive tape adsorbing structure 1112 is located on a side of the floating structure 1111 close to the to-be-attached workpiece 40, the first adhesive tape adsorbing structure 1112 is configured to adsorb the first portion 31, and the floating structure 1111 is configured to be gradually compressed during the movement of the first adhesive tape attaching mechanism 111 along the first direction X toward the to-be-attached workpiece 40, to keep the first adhesive tape adsorbing structure 1112 to abut against the first wall 41. Specifically, the first adhesive tape adsorbing structure 1112 can adsorb the first portion 31 to a region of the first wall 41 close to the second wall 42. During the process of the first adhesive tape attaching mechanism 111 approaching the to-be-attached workpiece 40 along the first direction X, the first adhesive tape adsorbing structure 1112 gradually approaches the first wall 41 and, upon a contact with the first wall 41, can adhere the first portion 31 to the region of the first wall 41 close to the second wall 42. Subsequently, the first adhesive tape attaching mechanism 111 continues to move along the first direction X, so that the floating structure 1111 can be gradually compressed. In addition, while the floating structure 1111 is being compressed, the first adhesive tape adsorbing structure 1112 is kept to abut against the first wall 41, allowing the first adhesive tape adsorbing structure 1112 to press the first portion 31, to tightly adhere the first portion 31 to the region of the first wall 41 close to the second wall 42, enhancing the adhesion strength between the first portion 31 and the first wall 41, thereby improving the adhesive tape attachment efficiency and effect.

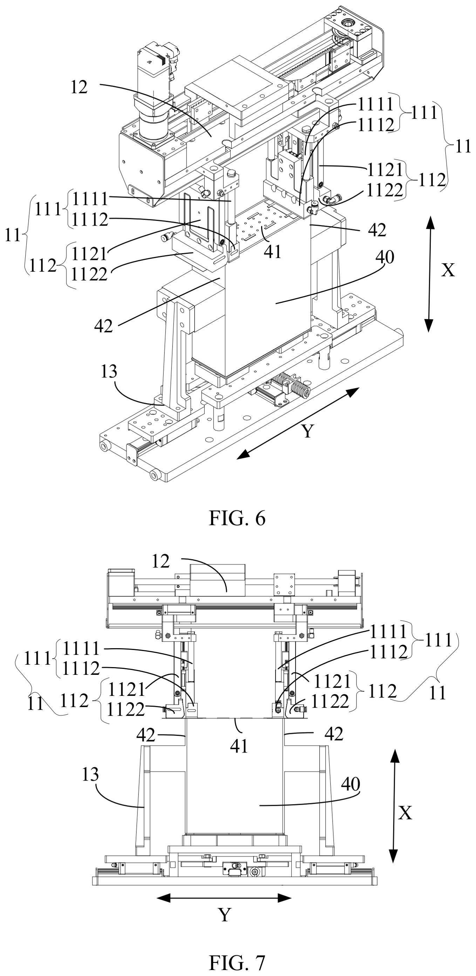

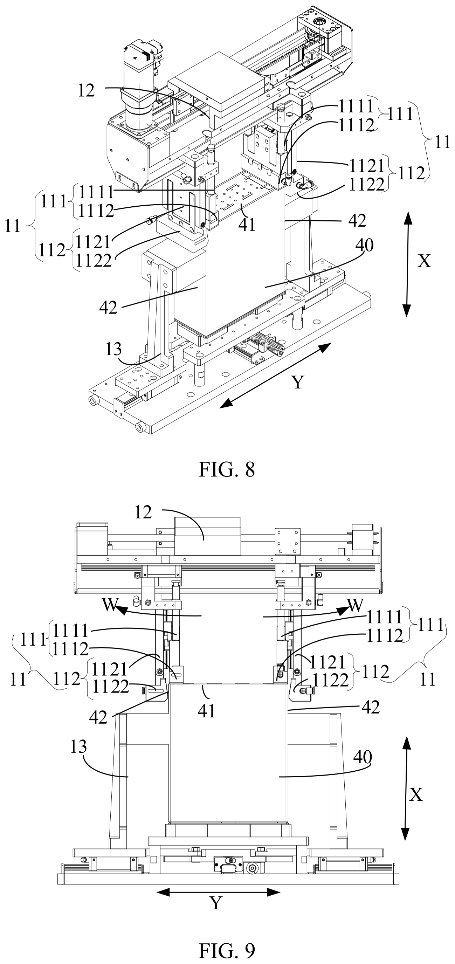

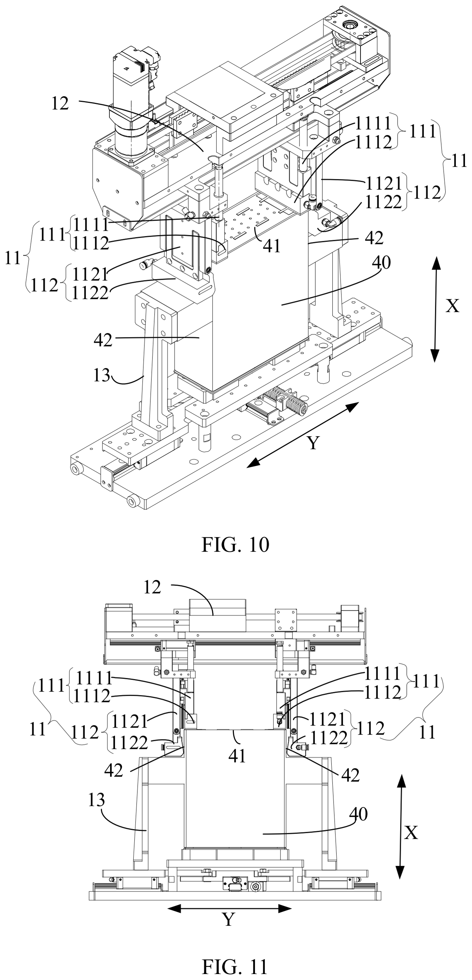

FIG. 6 to FIG. 11 respectively show schematic structural diagrams of the adhesive tape attaching device 1 in different states during an adhesive tape attachment process for a to-be-attached workpiece 40 according to an embodiment of this application, where FIG. 6 and FIG. 7 are schematic partial views of the adhesive tape attaching device 1 in the same state from different perspectives, FIG. 8 and FIG. 9 are schematic partial views of the adhesive tape attaching device 1 in the same state from different perspectives, FIG. 10 and FIG. 11 are schematic partial views of the adhesive tape attaching device 1 in the same state from different perspectives, FIG. 6, FIG. 8, and FIG. 10 are schematic diagrams from the same perspective but in different states, and FIG. 7, FIG. 9, and FIG. 11 are schematic diagrams from the same perspective but in different states. Additionally, for clarity, FIG. 6 to FIG. 11 only show schematic partial views of the adhesive tape attaching device 1, for example, only a partial region of the control assembly 12 included in the adhesive tape attaching device 1 is shown, but the embodiments of this application are not limited thereto.

Before adhesive tape attachment, the first adhesive tape adsorbing structure 1112 can first adsorb the first portion 31 of the adhesive tape 30, facilitating the movement of the first portion 31 close to the first wall 41 for preparation for adhesive tape attachment. As shown in FIG. 6 and FIG. 7, during the adhesive tape attachment process, the first adhesive tape attaching mechanism 111 moves along the first direction X and approaches the to-be-attached workpiece 40, where the first adhesive tape adsorbing structure 1112 closer to the to-be-attached workpiece 40 adsorbs the first portion 31 and comes into contact with the region of the first wall 41 close to the second wall 42. As shown in FIG. 8 and FIG. 9, the first adhesive tape attaching mechanism 111 continues to move along the first direction X, and the floating structure 1111 extending along the first direction X can be compressed to keep the first adhesive tape attaching mechanism 111 to abut against the first wall 41, and thus the first portion 31 is pressed onto a surface of the first wall 41. As shown in FIG. 10 and FIG. 11, the first adhesive tape attaching mechanism 111 continues to move along the first direction X, the floating structure 1111 can be further compressed along the first direction X, and the first adhesive tape adsorbing structure 1112 is kept to abut against the first wall 41 all the time, enhancing the pressing of the first adhesive tape adsorbing structure 1112 on the surface of the first wall 41, thereby tightly adhering the first portion 31 to the surface of the first wall 41.

It should be understood that to fix the to-be-attached workpiece 40, a clamping and fixing mechanism 13 may be used to fix the to-be-attached workpiece 40. For example, the to-be-attached workpiece 40 may be clamped by the clamping and fixing mechanism 13 along the second direction Y and moved between different workstations, so that the to-be-attached workpiece 40 completes different processing procedures at different workstations. For example, the to-be-attached workpiece 40 is clamped by the clamping and fixing mechanism 13 and moved to an adhesive tape attaching workstation, the adhesive tape attaching device 1 adheres the adhesive tape 30 to the to-be-attached workpiece 40, and continues to convey the to-be-attached workpiece 40 to other workstations after the adhesive tape is attached. Additionally, during the adhesive tape attachment process, the clamping and fixing mechanism 13 may also be configured to fix the to-be-attached workpiece 40 to reduce misalignment of the to-be-attached workpiece 40 during adhesive tape attachment, thereby improving the adhesive tape attachment efficiency.

In these embodiments of this application, the floating structure 1111 is configured to be gradually reset during the movement of the first adhesive tape attaching mechanism 111 along the first direction X away from the to-be-attached workpiece 40. After the attachment as shown in FIG. 10 and FIG. 11 is completed, the control assembly 12 can control the first adhesive tape attaching mechanism 111 to gradually move away from the to-be-attached workpiece 40 along the first direction X, and the floating structure 1111 is also gradually reset from the compressed state until the first adhesive tape adsorbing structure 1112 leaves the first wall 41, to complete the adhesive tape attachment. Subsequently, when an adhesive tape is attached to another to-be-attached workpiece 40, the floating structure 1111 may be compressed and reset again, to complete batch processing of to-be-attached workpieces 40.

It should be understood that the floating structure 1111 of this application may be implemented in various ways. For example, the floating structure 1111 includes a first spring 1113 extending along the first direction X. Specifically, the first spring 1113 may be any type of spring, such as a tension spring or a compression spring, and the embodiments of this application are not limited thereto. The floating structure 1111 can be compressed or reset through deformation of the first spring 1113, achieving simple structure and easy implementation. In some embodiments, as shown in FIG. 4 to FIG. 11, the floating structure 1111 may further include a tubular structure, and the tubular structure may be internally provided with the first spring 1113 to prolong the service life of the first spring 1113. In some embodiments, the floating structure 1111 may further be provided with a groove structure, and the groove structure may be configured to accommodate at least a portion of the tubular structure when the floating structure 1111 is gradually compressed; and when the floating structure 1111 is gradually reset, the accommodated portion of the tubular structure gradually leaves the groove structure.

In these embodiments of this application, the first adhesive tape adsorbing structure 1112 is a hollow structure, a surface of the first adhesive tape adsorbing structure 1112 facing the first wall 41 is a first adhesive tape adsorbing surface 1114, the first adhesive tape adsorbing surface 1114 is provided with a first adsorption hole 1115, and the first adsorption hole 1115 is used for adsorbing the first portion 31. For example, the first adhesive tape adsorbing surface 1114 can use the first adsorption hole 1115 to adsorb the first portion 31 to the first wall 41 and adhere the first portion 31 to the first wall 41. By adsorbing the first portion 31 of the adhesive tape 30 using the first adhesive tape adsorbing surface 1114 close to the to-be-attached workpiece 40, during the process of the first adhesive tape adsorbing structure 1112 approaching the first wall 41, there is no need to flip the first adhesive tape adsorbing structure 1112 or flip the to-be-attached workpiece 40, facilitating the movement of the first portion 31 and thus improving the adhesive tape attachment efficiency. Additionally, configuring the first adhesive tape adsorbing structure 1112 as a hollow structure and providing the first adsorption hole 1115 on the first adhesive tape adsorbing surface 1114 allows for the adjustment and utilization of a pressure difference between the interior and exterior of the first adhesive tape adsorbing structure 1112, to allow the first adhesive tape adsorbing surface 1114 to adsorb the first portion 31, achieving simple structure and easy implementation.

It should be understood that the process of the first adhesive tape adsorbing structure 1112 adsorbing the first portion 31 through the first adhesive tape adsorbing surface 1114 in these embodiments of this application can be achieved in various ways. For example, as shown in FIG. 4 to FIG. 11, since the interior of the first adhesive tape adsorbing structure 1112 may be a hollow structure and the first adhesive tape adsorbing surface 1114 may be provided with one or more first adsorption holes 1115, a pressure difference between the interior and exterior of the first adhesive tape adsorbing structure 1112 can be adjusted through the first adsorption hole 1115 to adsorb the first portion 31 of the adhesive tape 30. Further, the first adhesive tape adsorbing structure 1112 may further include a first interface 1116. When the first adhesive tape adsorbing surface 1114 of the first adhesive tape adsorbing structure 1112 adsorbs the first portion 31, the first portion 31 can cover the first adsorption hole 1115, and then an internal gas pressure of the first adhesive tape adsorbing structure 1112 can be reduced through the first interface 1116, for example, at least part of the gas inside the first adhesive tape adsorbing structure 1112 can be discharged through the first interface 1116, creating a pressure difference between the interior and exterior of the first adhesive tape adsorbing structure 1112, to allow the first portion 31 to be adsorbed to the first adhesive tape adsorbing surface 1114 and move together with the first adhesive tape adsorbing surface 1114. After the first portion 31 is adhered to the first wall 41, the internal gas pressure of the first adhesive tape adsorbing structure 1112 can be increased through the first interface 1116, for example, part of gas inside the first adhesive tape adsorbing structure 1112 can be released through the first interface 1116, so that the first portion 31 is no longer adsorbed to the first adhesive tape adsorbing surface 1114 and leaves the first portion 31 of the adhesive tape 30, to complete the adhesive tape attachment.

In some embodiments, the first adhesive tape adsorbing surface 1114 is parallel to the first wall 41; and/or, the first adhesive tape adsorbing surface 1114 is perpendicular to the first direction X. Configuring the first adhesive tape adsorbing surface 1114 to be parallel to the first wall 41 ensures that the first portion 31 adsorbed by the first adhesive tape adsorbing surface 1114 is also parallel to the first wall 41 while the first adhesive tape adsorbing surface 1114 is approaching the first wall 41. Thus, when the first portion 31 is adhered to the first wall 41, different regions of the first portion 31 can be uniformly stressed and adhered to the first wall 41, improving the flatness of the first portion 31. Configuring the first adhesive tape adsorbing surface 1114 to be perpendicular to the first direction X ensures that the first adhesive tape adsorbing surface 1114 remains perpendicular to the first direction X during the movement of the first adhesive tape adsorbing structure 1112 along the first direction X, facilitating the adjustment of adhesive tape attaching angle and position.

It should be understood that the shape and size of the first adhesive tape adsorbing surface 1114 in these embodiments of this application may be set based on actual applications. For example, the first adhesive tape adsorbing surface 1114 may be in a rectangular shape to facilitate processing and adaptation to various types of adhesive tapes 30. For another example, an area of the first adhesive tape adsorbing surface 1114 is typically slightly larger than that of the first portion 31 of the adhesive tape 30, to stably adsorb the first portion 31, improving the stability during the adhesive tape attachment process.

The first adhesive tape attaching mechanism 111 of these embodiments of this application has been described above with reference to the drawings, and the second adhesive tape attaching mechanism 112 of these embodiments of this application are described below.

In these embodiments of this application, the second adhesive tape attaching mechanism 112 includes a rotating structure 1121 and a second adhesive tape adsorbing structure 1122. The second adhesive tape adsorbing structure 1122 is located on a side of the rotating structure 1121 close to the to-be-attached workpiece 40, the rotating structure 1121 is rotatably connected to the second adhesive tape adsorbing structure 1122, and the second adhesive tape adsorbing structure 1122 is configured to adsorb the second portion 32. That is, the second adhesive tape adsorbing structure 1122 is configured to adsorb the second portion 32 to the second wall 42. In this way, during the movement of the second adhesive tape attaching mechanism 112 along the first direction X toward the to-be-attached workpiece 40, since the rotating structure 1121 is rotatably connected to the second adhesive tape adsorbing structure 1122, the second adhesive tape adsorbing structure 1122 can rotate relative to the rotating structure 1121, so that the second adhesive tape adsorbing structure 1122 is not blocked by the first wall 41 and abuts against the second wall 42. The second adhesive tape adsorbing structure 1122 adsorbs the second portion 32 of the adhesive tape 30 to a region of the second wall 42 close to the first wall 41. During the movement of the second adhesive tape attaching mechanism 112 along the first direction X toward the to-be-attached workpiece 40, the second adhesive tape adsorbing structure 1122 can rotate relative to the rotating structure 1121, allowing the second adhesive tape adsorbing structure 1122 to adhere the second portion 32 to the second wall 42. This enables the first portion 31 of the adhesive tape 30 to be adhered to the first wall 41 and also almost synchronously enables the second portion 32 to be adhered to the second wall 42 without flipping the to-be-attached workpiece 40, improving the attachment efficiency of the adhesive tape 30, thereby improving the processing efficiency of the to-be-attached workpiece 40.

Specifically, before adhesive tape attachment, the first adhesive tape adsorbing structure 1112 can first adsorb the first portion 31 of the adhesive tape 30, and the second adhesive tape adsorbing structure 1122 adsorbs the second portion 32 of the adhesive tape 30, so that the adhesive tape 30 can be moved close to the first wall 41 and the second wall 42 of the to-be-attached workpiece 40 for preparation for adhesive tape attachment.

As shown in FIG. 6 and FIG. 7, during the adhesive tape attachment process, the first adhesive tape attaching mechanism 111 and the second adhesive tape attaching mechanism 112 move along the first direction X and approach the to-be-attached workpiece 40, where the first adhesive tape adsorbing structure 1112 adsorbs the first portion 31 and comes into contact with a region of the first wall 41 close to the second wall 42, while the second adhesive tape adsorbing structure 1122 adsorbs the second portion 32 and moves close to the second wall 42 without coming into contact with the second wall 42.

As shown in FIG. 8 and FIG. 9, the first adhesive tape attaching mechanism 111 and the second adhesive tape attaching mechanism 112 continue to move along the first direction X, where the floating structure 1111 of the first adhesive tape attaching mechanism 111 can be compressed to keep the first adhesive tape attaching mechanism 111 to abut against the first wall 41, so as to press the first portion 31 onto the surface of the first wall 41; while the second adhesive tape adsorbing structure 1122 of the second adhesive tape attaching mechanism 112 rotates slightly relative to the rotating structure 1121, allowing the second adhesive tape adsorbing structure 1122 to avoid obstruction by the first wall 41 and adhere the second portion 32 to the surface of the second wall 42 intersecting with the first wall 41. It should be understood that a rotation direction W of the second adhesive tape adsorbing structure 1122 is related to relative positions between the adhesive tape attaching assembly 11 and the to-be-attached workpiece 40. For example, the second adhesive tape adsorbing structure 1122 of the left adhesive tape attaching assembly 11 rotates clockwise to allow the adhesive tape 30 to be adhered to the left second wall 42, while the second adhesive tape adsorbing structure 1122 of the right adhesive tape attaching assembly 11 rotates counterclockwise to allow another adhesive tape 30 to be adhered to the right second wall 42.

As shown in FIG. 10 and FIG. 11, the first adhesive tape attaching mechanism 111 continues to move along the first direction X, the floating structure 1111 may be further compressed, and the first adhesive tape attaching mechanism 111 is kept to abut against the first wall 41 all the time, enhancing the pressing of the first adhesive tape attaching mechanism 111 on the surface of the first wall 41, thereby tightly adhering the first portion 31 to the surface of the first wall 41. The second adhesive tape adsorbing structure 1122 of the second adhesive tape attaching mechanism 112 adheres the entire second portion 32 to the region of the second wall 42 close to the first wall 41 during the movement along the first direction X, to complete the adhesive tape attachment process of the adhesive tape 30.

In these embodiments of this application, the second adhesive tape adsorbing structure 1122 is configured to rotate relative to the rotating structure 1121 so as to be reset during the movement of the second adhesive tape attaching mechanism 112 along the first direction X away from the to-be-attached workpiece 40. After the attachment as shown in FIG. 10 and FIG. 11 is completed, the control assembly 12 can control the first adhesive tape attaching mechanism 111 to gradually move away from the to-be-attached workpiece 40 along the first direction X, and the floating structure 1111 is also gradually reset from the compressed state. Similarly, the control assembly 12 controls the second adhesive tape attaching mechanism 112 to gradually move away from the to-be-attached workpiece 40 along the first direction X, where the second adhesive tape adsorbing structure 1122 rotates relative to the rotating structure 1121, causing the second adhesive tape adsorbing structure 1122 to be gradually reset until the first adhesive tape adsorbing structure 1112 leaves the first wall 41 and the second adhesive tape adsorbing structure 1122 leaves the second wall 42, to complete the adhesive tape attachment, and then the adhesive tape attaching device 1 can leave the to-be-attached workpiece 40. Subsequently, the adhesive tape attaching device 1 can further continue to attach an adhesive tape to another to-be-attached workpiece 40, so that the floating structure 1111 can be compressed and reset again, and the second adhesive tape adsorbing structure 1122 can also rotate and be reset again, to complete batch processing of the to-be-attached workpieces 40.

It should be understood that during the process of the control assembly 12 controlling the second adhesive tape attaching mechanism 112 to gradually move away from the to-be-attached workpiece 40 along the first direction X, a rotation direction W of the second adhesive tape adsorbing structure 1122 relative to the rotating structure 1121 during rotation is opposite to the rotation direction W during the adhesive tape attachment process shown in FIG. 6 to FIG. 11. For example, the second adhesive tape adsorbing structure 1122 of the left adhesive tape attaching assembly 11 rotates clockwise when adhering the adhesive tape 20, to allow the adhesive tape 30 to be adhered to the left second wall 42; while during the reset process, the second adhesive tape adsorbing structure 1122 rotates counterclockwise to reset the second adhesive tape adsorbing structure 1122. Correspondingly, the second adhesive tape adsorbing structure 1122 of the right adhesive tape attaching assembly 11 rotates counterclockwise when adhering the adhesive tape 20, to allow another adhesive tape 30 to be adhered to the right second wall 42; while during the reset process, the second adhesive tape adsorbing structure 1122 rotates clockwise to reset the second adhesive tape adsorbing structure 1122, to complete the entire adhesive tape attachment process.

It should be understood that the second adhesive tape adsorbing structure 1122 in this application can rotate and be reset in various ways. For example, the second adhesive tape adsorbing structure 1122 includes a second spring 1124 extending along the rotation direction of the second adhesive tape adsorbing structure 1122. Specifically, the second spring 1124 may be any type of spring, such as a tension spring or a compression spring, and the embodiments of this application are not limited thereto. The second adhesive tape adsorbing structure 1122 can rotate and be reset in different directions through deformation of the second spring 1124, achieving simple structure and easy implementation. In some embodiments, as shown in FIG. 4 to FIG. 11, the second adhesive tape adsorbing structure 1122 may further include a tubular structure, and the tubular structure may be internally provided with the second spring 1124 to prolong the service life of the second spring 1124. In some embodiments, the second adhesive tape adsorbing structure 1122 may further be provided with a groove structure, and the groove structure may be configured to accommodate at least a portion of the tubular structure. When the second adhesive tape adsorbing structure 1122 rotates to adhere the second portion 32 to the second wall 42, the portion of the tubular structure accommodated in the groove structure leaves the groove structure; and when the second adhesive tape adsorbing structure 1122 rotates to be gradually reset, at least a portion of the tubular structure can be accommodated in the groove structure. An outer side of a bottom wall of the groove structure can abut against the floating structure 1111 of the first adhesive tape attaching mechanism 111 to make the groove structure relatively stable.

In these embodiments of this application, the rotating structure 1121 includes a rotating shaft 1123, and the second adhesive tape adsorbing structure 1122 is provided with a through hole, where the rotating shaft 1123 passes through the through hole. In this way, the second adhesive tape adsorbing structure 1122 sleeves the periphery of the rotating shaft 1123 through the through hole, to allow the second adhesive tape adsorbing structure 1122 to rotate around the rotating shaft 1123, achieving simple and stable structure and easy implementation.

In these embodiments of this application, the second adhesive tape adsorbing structure 1122 is a hollow structure, a surface of the second adhesive tape adsorbing structure 1122 facing the to-be-attached workpiece 40 is a second adhesive tape adsorbing surface 1125, the second adhesive tape adsorbing surface 1125 is provided with a second adsorption hole 1128, and the second adsorption hole 1128 is used for adsorbing the second portion 32. For example, the second adhesive tape adsorbing surface 1125 can use the second adsorption hole 1128 to adsorb the second portion 32 to the second wall 42 and then adhere the second portion 32 to the second wall 42. The second portion 32 of the adhesive tape 30 is adsorbed using the first adhesive tape adsorbing surface 1125 close to the to-be-attached workpiece 40, so that the adhesive tape 30 can move close to the to-be-attached workpiece 40 almost synchronously with the first adhesive tape adsorbing surface 1114 adsorbing the first portion 31 of the adhesive tape 30, facilitating the overall movement of the adhesive tape 30 and reducing misalignment or wrinkling of the adhesive tape 30 before the adhesive tape 30 is adhered to the to-be-attached workpiece 40, thereby improving the adhesive tape attachment efficiency. Additionally, configuring the second adhesive tape adsorbing structure 1122 as a hollow structure and providing the second adsorption hole 1128 on the second adhesive tape adsorbing surface 1125 allows for the adjustment and utilization of a pressure difference between the interior and exterior of the second adhesive tape adsorbing structure 1122, to allow the second adhesive tape adsorbing surface 1125 to adsorb the second portion 32, achieving simple structure and easy implementation.

It should be understood that the process of the second adhesive tape adsorbing structure 1122 adsorbing the second portion 32 through the second adhesive tape adsorbing surface 1125 in these embodiments of this application can be achieved in various ways. For example, as shown in FIG. 4 to FIG. 11, since the interior of the second adhesive tape adsorbing structure 1122 may be a hollow structure and the second adhesive tape adsorbing surface 1125 may be provided with one or more second adsorption holes 1128, the pressure difference between the interior and exterior of the second adhesive tape adsorbing structure 1122 may be adjusted through the second adsorption hole 1128 to adsorb the second portion 32 of the adhesive tape 30. Further, the second adhesive tape adsorbing structure 1122 may also include a second interface 1129. When the second adhesive tape adsorbing surface 1125 of the second adhesive tape adsorbing structure 1122 adsorbs the second portion 32, the second portion 32 can cover the second adsorption hole 1128, and then the internal gas pressure of the second adhesive tape adsorbing structure 1122 can be reduced through the second interface 1129. For example, at least part of the gas inside the second adhesive tape adsorbing structure 1122 can be discharged through the second interface 1129, creating a pressure difference between the interior and exterior of the second adhesive tape adsorbing structure 1122, to allow the second portion 32 to be adsorbed to the second adhesive tape adsorbing surface 1125 and move together with the second adhesive tape adsorbing surface 1125. While the second portion 32 is being adhered to the second wall 42, the second portion 32 can be gradually detached from the second adhesive tape adsorbing surface 1125. For example, at least a portion of the second adsorption hole 1128 can be gradually exposed, or the internal gas pressure of the second adhesive tape adsorbing structure 1122 can be increased through the second interface 1129. For example, part of gas inside the second adhesive tape adsorbing structure 1122 can be released through the second interface 1129. Both ways can reduce the pressure difference between the interior and exterior of the second adhesive tape adsorbing structure 1122, allowing the second portion 32 to no longer be adsorbed to the second adhesive tape adsorbing surface 1125 and leave the second portion 32 of the adhesive tape 30, to complete the adhesive tape attachment.

In some embodiments, a surface of the second adhesive tape adsorbing structure 1122 facing the first adhesive tape attaching mechanism 111 and intersecting with the second adhesive tape adsorbing surface 1125 is an adhesive tape attaching surface 1126, the second adhesive tape adsorbing surface 1125 is configured to adsorb the second portion 32 to the to-be-attached workpiece 40, and the adhesive tape attaching surface 1126 is configured to adhere the second portion 32 to the second wall 42. In these embodiments of this application, the adhesive tape attaching surface 1126 intersects with the second adhesive tape adsorbing surface 1125, and when the adhesive tape attaching device 1 is not performing adhesive tape attachment, that is, when there is no relative movement between the first adhesive tape attaching mechanism 111 and the second adhesive tape attaching mechanism 112, the adhesive tape attaching surface 1126 faces the first adhesive tape attaching mechanism 111. Since the second adhesive tape adsorbing structure 1122 needs to adhere the second portion 32 to the second wall 42 intersecting with the first wall 41, configuring the surface intersecting with the second adhesive tape adsorbing surface 1125 as the adhesive tape attaching surface 1126 can allow the adhesive tape attaching surface 1126 to directly adhere the second portion 32 adsorbed by the second adhesive tape adsorbing surface 1125 to the second wall 42 gradually without flipping the to-be-attached workpiece 40 during the movement of the second adhesive tape adsorbing structure 1122 along the first direction X, thereby improving the adhesive tape attachment efficiency.

For example, as shown in FIG. 6 and FIG. 7, the second adhesive tape adsorbing surface 1125 adsorbs the second portion 32 to a position close to the to-be-attached workpiece 40, and then the adhesive tape attaching surface 1126 accurately starts to attach the adhesive tape. As shown in FIG. 8 and FIG. 9, during the continued movement of the second adhesive tape attaching mechanism 112 along the first direction X, the second adhesive tape adsorbing structure 1122 deflects relative to the rotating structure 1121, allowing the adhesive tape attaching surface 1126 to face the second wall 42 and move along the first direction X, thereby gradually adhering the second portion 32 originally adsorbed by the second adhesive tape adsorbing surface 1125 to the second wall 42 through the adhesive tape attaching surface 1126. During this process, some regions of the second portion 32 have been adhered to the second wall 42 through the adhesive tape attaching surface 1126, but some parts may still remain unadhered to the second wall 42 and continue to be adsorbed by the second adhesive tape adsorbing surface 1125. As shown in FIG. 10 and FIG. 11, after adhesive tape attachment is completed, the adhesive tape attaching surface 1126 adheres the entire second portion 32 to the second wall 42, and the second adhesive tape adsorbing surface 1125 no longer adsorbs the second portion 32.

In some embodiments, the second adhesive tape adsorbing structure 1122 includes a protruding structure 1127 protruding toward the first adhesive tape attaching mechanism 111, and the adhesive tape attaching surface 1126 includes a surface of the protruding structure 1127 facing the first adhesive tape attaching mechanism 111. The provision of the protruding structure 1127 on the second adhesive tape adsorbing structure 1122 allows the adhesive tape attaching surface 1126 fit more closely to the second wall 42, facilitating tight attachment of the second portion 32 to the second wall 42.

In some embodiments, the adhesive tape attaching surface 1126 is an arched surface. Specifically, the arched adhesive tape attaching surface 1126 means that the arched adhesive tape attaching surface 1126 is a surface with a specific curvature, and the surface is relatively smooth. In this way, during the movement of the second adhesive tape adsorbing structure 1122 along the first direction X, the arched adhesive tape attaching surface 1126 moves along the first direction X and passes over the second portion 32, allowing the second portion 32 to be adhered to the second wall 42 more uniformly, which helps to enhance the attachment effect, thereby improving the adhesive tape attachment efficiency.

In some embodiments, the second adhesive tape adsorbing surface 1125 is parallel to the first wall 41; and/or, the second adhesive tape adsorbing surface 1125 is perpendicular to the first direction X. Configuring the second adhesive tape adsorbing surface 1125 to be parallel to the first wall 41 ensures that the second portion 32 adsorbed by the second adhesive tape adsorbing surface 1125 is also parallel to the first wall 41 while the second adhesive tape adsorbing surface 1125 is approaching the first wall 41. Thus, when the first adhesive tape adsorbing surface 1114 is also parallel to the first wall 41, both the first portion 31 and the second portion 32 are parallel to the first wall 41, allowing the first portion 31 and the second portion 32 to approach the to-be-attached workpiece 40 smoothly, thereby reducing wrinkling of the adhesive tape 30. Configuring the second adhesive tape adsorbing surface 1125 to be perpendicular to the first direction X ensures that the second adhesive tape adsorbing surface 1125 remains perpendicular to the first direction X while the second adhesive tape adsorbing surface 1125 moves along the first direction X toward and close to the to-be-attached workpiece 40, facilitating the adjustment of adhesive tape attaching angle and position. For example, the second wall 42 intersects with the first wall 41 and is typically perpendicular to the first wall 41, that is, parallel to the first direction X, so the second adhesive tape adsorbing surface 1125 can be approximately perpendicular to the second wall 42.

In these embodiments of this application, by controlling the entire adhesive tape attaching assembly 11 to move toward the to-be-attached workpiece 40 using the control assembly 12, the first adhesive tape attaching mechanism 111 can adhere the first portion 31 of the adhesive tape 30 to the first wall 41, and the second adhesive tape attaching mechanism 112 can adhere the second portion 32 of the adhesive tape 30 to the second wall 42, so that the adhesive tape 30 is adhered to the intersecting region of two intersecting walls of the to-be-attached workpiece 40. In this process, there is no need to flip the to-be-attached workpiece 40, reducing misalignment of the adhesive tape 30 caused by flipping the to-be-attached workpiece 40; and there is also no need to use multiple devices to work alternately and cooperatively, simplifying the overall structural complexity of the adhesive tape attaching device 1. The adhesive tape attaching device 1 may be suitable for adhering an adhesive tape to any to-be-attached workpiece 40, and the to-be-attached workpiece 40 may be any component, achieving application in flexible and wide-ranging scenarios.

In some embodiments, the to-be-attached workpiece 40 in these embodiments of this application may be a component within a battery or a battery cell, where the battery in these embodiments of this application may include multiple battery cells, and the battery is suitable for various electric devices using batteries.

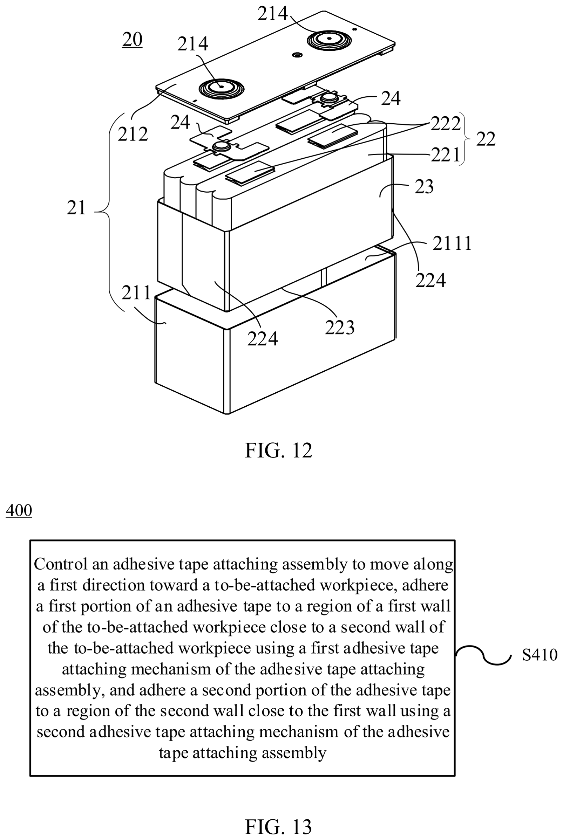

Specifically, FIG. 12 shows a schematic structural exploded view of a battery cell 20 according to an embodiment of this application. The structure of the battery cell 20 is described below by using FIG. 12 as an example. As shown in FIG. 12, the battery cell 20 may include one or more electrode assemblies 22 and a housing 21 for accommodating the electrode assembly 22.

It should be understood that, as shown in FIG. 12, the housing 21 in this embodiment of this application may be a polyhedral structure. Specifically, the housing 21 may include a shell 211 and an end cover 212, where the shell 211 may be a hollow structure with at least one end provided with an opening 2111, and the shape of the end cover 212 may be adapted to the shape of the shell 211. The end cover 212 is configured to cover the opening 2111 of the shell 211 to isolate the internal environment of the battery cell 20 from the external environment through the housing 21. For ease of explanation, the housing 21 being a cuboid is used as an example in this application. Specifically, as shown in FIG. 12, the housing 21 includes: a shell 211, where the shell 211 is a hollow structure with an opening at one end; and an end cover 212, where the end cover 212 is configured to cover the opening 2111 of the shell 211 to form a sealed cavity for placing the electrode assembly 22.

In the battery cell 20, the interior of the shell 211 is used for accommodating the electrode assembly 22, and depending on actual use requirements, one or more electrode assemblies 22 may be provided within the shell 211. For example, the battery cell 20 including two electrode assemblies 22 arranged along a thickness direction of the electrode assemblies 22 is used as an example in FIG. 12, but the embodiments of this application are not limited thereto.

The electrode assembly 22 in this embodiment of this application is a component of the battery cell 20 where electrochemical reactions take place. The electrode assembly 22 may be cylindrical, cuboidal, or the like. For example, if the electrode assembly 22 is a cylindrical structure, the shell 211 may also be a cylindrical structure, and if the electrode assembly 22 is a cuboidal structure, the shell 211 may also be a cuboidal structure.

For any electrode assembly 22, the electrode assembly 22 may include a tab 222 and a main body 221. Specifically, as shown in FIG. 12, the electrode assembly 22 may include at least two tabs 222, the at least two tabs 222 may include at least one cathode tab and at least one anode tab, the cathode tab may be formed by stacking portions of a cathode plate which are not coated with a cathode active material, and the anode tab may be formed by stacking portions of an anode plate which are not coated with an anode active material.

The housing 21 in this embodiment of this application is further provided with an electrode terminal 214, where the electrode terminal 214 is configured to be electrically connected to the electrode assembly 22 to output electrical energy of the battery cell 20. As shown in FIG. 12, the battery cell 20 may further include at least two electrode terminals 214, where the at least two electrode terminals 214 may be disposed on a same wall or different walls of the battery cell 20. For example, the battery cell 20 including two electrode terminals 214 and the two electrode terminals 214 being both disposed on the end cover 212 is used as an example in FIG. 12. The two electrode terminals 214 are a cathode terminal and an anode terminal, respectively. Each electrode terminal 214 is correspondingly provided with a connecting member 24, and the connecting member 24 is located between the end cover 212 and the electrode assembly 22 and is configured to electrically connect the electrode assembly 22 to the electrode terminal 214. Specifically, as shown in FIG. 12, the cathode tab of the electrode assembly 22 can be connected to the cathode terminal through one connecting member 24, and the anode tab of the electrode assembly 22 can be connected to the anode terminal through another connecting member 24.

It should be understood that the battery cell 20 in this embodiment of this application further includes an insulating layer 23, where the insulating layer 23 is a hollow structure with at least one opening. For example, as shown in FIG. 12, this application mainly takes the insulating layer 23 with one opening as an example, and the opening of the insulating layer 23 faces the end cover 212. The insulating layer 23 is provided between the shell 211 and the electrode assembly 22. The hollow structure of the insulating layer 23 is configured to accommodate the electrode assembly 22, allowing the insulating layer 23 to wrap at least a portion of an outer surface of the electrode assembly 22, and the insulating layer 23 may be configured to maintain electrical insulation between the electrode assembly 22 and an inner wall of the shell 211. For example, the insulating layer 23 may be a film type cover layer made of an insulating material, to wrap at least a portion of the periphery of the electrode assembly 22. Specifically, before wrapping the electrode assembly 22, the insulating layer 23 may be a sheet-like structure, forming a hollow opening structure wrapping an outer side of the electrode assembly 22 through the action of a film wrapping mechanism.

In this embodiment of this application, the shape of the insulating layer 23 may be determined based on the shape of the electrode assembly 22 or the shape of the shell 211. For example, the insulating layer 23 being a cuboid is used as an example in this application, but the embodiments of this application are not limited thereto.

It should be understood that the to-be-attached workpiece 40 in this embodiment of this application may include an electrode assembly 22. For example, the adhesive tape 30 may be configured to adhere and fix the corner portions of the main body 221 of the electrode assembly 22, so as to improve the structural stability of the electrode assembly 22. Alternatively, the to-be-attached workpiece 40 in this embodiment of this application may further include an electrode assembly 22 and an external insulating layer 23. That is, the adhesive tape 30 in this embodiment of this application may also be configured to adhere and fix the insulating layer 23 outside the electrode assembly 22 to allow the insulating layer 23 to stably wrap an outer surface of the electrode assembly 22, reducing the possibility of a gap in the insulating layer 23 which may affect the insulation effect of the insulating layer 23.

It should be understood that the first wall 41 of the to-be-attached workpiece 40 in this embodiment of this application may be any end surface of the electrode assembly 22, and the electrode assembly 22 may include one or more first walls 41. For example, as shown in FIG. 12, the first wall 41 in this embodiment of this application may be a first end surface 223 of the electrode assembly 22 facing the end surface where the tab 222 is located, but the embodiments of this application are not limited thereto.

The electrode assembly 22 in this embodiment of this application includes a first end surface 223 and a second end surface 224 intersecting with each other, that is, any end surface intersecting with the first end surface 223 may be the second end surface 224. Therefore, the second wall 42 in this embodiment of this application may be any second end surface 224 intersecting with the first end surface 223. Specifically, the first portion 31 of the adhesive tape 30 in this embodiment of this application may be adhered to a region of the first end surface 223 close to the second end surface 224, and the second portion 32 of the adhesive tape 30 is adhered to a region of the second end surface 224 close to the first end surface 223, allowing the adhesive tape 30 to wrap and fix an intersecting region of the first end surface 223 and the second end surface 224. For example, if the outer surface of the electrode assembly 22 is wrapped with an insulating layer 23, the insulating layer 23 may have a gap in the intersecting region of the first end surface 223 and the second end surface 224. Therefore, the adhesive tape 30 can wrap around this gap to reduce the possibility of insulation failure of the insulating layer 23 in the intersecting region of the first end surface 223 and the second end surface 224, thereby improving the structural stability of the electrode assembly 22.

The control assembly 12 in this embodiment of this application can control the first adhesive tape attaching mechanism 111 and the second adhesive tape attaching mechanism 112 included in the adhesive tape attaching assembly 11 to move along the first direction X, allowing the first adhesive tape attaching mechanism 111 and the second adhesive tape attaching mechanism 112 to approach or move away from the electrode assembly 22 along the first direction X. Specifically, when the first adhesive tape attaching mechanism 111 approaches the electrode assembly 22 under the control of the control assembly 12, the first portion 31 of the adhesive tape 30 can be adhered to a region of the first end surface 223 of the electrode assembly 22 close to the second end surface 224; and when the second adhesive tape attaching mechanism 112 approaches the electrode assembly 22 under the control of the control assembly 12, the second portion 32 of the adhesive tape 30 can be adhered to a region of the second end surface 224 of the electrode assembly 22 close to the first end surface 223. Conversely, the first adhesive tape attaching mechanism 111 may alternatively move away from the electrode assembly 22 under the control of the control assembly 12, and the second adhesive tape attaching mechanism 112 may alternatively move away from the electrode assembly 22 under the control of the control assembly 12 to complete the adhesive tape attachment and move away from the electrode assembly 22, but the embodiments of this application are not limited thereto.

The adhesive tape attaching device 1 in this embodiment of this application may be applied to the processing and assembly process of the electrode assembly 22, for example, it may be used in any scenario where an adhesive tape 30 needs to be adhered to an intersecting region of two intersecting end surfaces of the electrode assembly 22, improving the attachment efficiency of the adhesive tape 30, that is, improving the processing efficiency of the electrode assembly 22, thereby improving the processing and production efficiency of the battery cell 20 and the battery.

The adhesive tape attaching device 1 of the embodiments of this application has been described in detail above with reference to the drawings, and an adhesive tape attaching method of the embodiments of this application is described below, where the parts not described in detail can refer to the foregoing embodiments.

FIG. 13 shows a schematic flowchart of an adhesive tape attaching method 400 according to an embodiment of this application. The method 400 may be used for the adhesive tape attachment process of any to-be-attached workpiece 40, for example, it is also suitable for processing the electrode assembly 22 of the battery cell 20 described above. As shown in FIG. 13, the adhesive tape attaching method 400 may include the following step: S410, controlling an adhesive tape attaching assembly 11 to move along a first direction X toward a to-be-attached workpiece 40, adhering a first portion 31 of an adhesive tape 30 to a region of a first wall 41 of the to-be-attached workpiece 40 close to a second wall 42 of the to-be-attached workpiece 40 using a first adhesive tape attaching mechanism 111 of the adhesive tape attaching assembly 11, and adhering a second portion 32 of the adhesive tape 30 to a region of the second wall 42 close to the first wall 41 using a second adhesive tape attaching mechanism 112 of the adhesive tape attaching assembly 11, where the first portion 31 is connected to the second portion 32, and the first wall 41 intersects with the second wall 42.

In some embodiments, the adhering a first portion 31 of an adhesive tape 30 to a region of a first wall 41 of the to-be-attached workpiece 40 close to a second wall 42 of the to-be-attached workpiece 40 using a first adhesive tape attaching mechanism 111 of the adhesive tape attaching assembly 11 includes: compressing a floating structure 1111 of the first adhesive tape attaching mechanism 111, and keeping a first adhesive tape adsorbing structure 1112 of the first adhesive tape attaching mechanism 111 to abut against the first wall 41 to adhere the first portion 31 to the first wall 41.

In some embodiments, the adhering a second portion 32 of the adhesive tape 30 to a region of the second wall 42 close to the first wall 41 using a second adhesive tape attaching mechanism 112 of the adhesive tape attaching assembly 11 includes: rotating a second adhesive tape adsorbing structure 1122 of the second adhesive tape attaching mechanism 112 using a rotating structure 1121 of the second adhesive tape attaching mechanism 112 to adhere the second portion 32 to the second wall 42.

In some embodiments, the adhesive tape attaching method 400 further includes: controlling the adhesive tape attaching assembly 11 to move along the first direction X away from the to-be-attached workpiece 40.

In some embodiments, the to-be-attached workpiece 40 includes two second walls 42 intersecting with and disposed opposite the first wall 41, and the controlling an adhesive tape attaching assembly 11 to move along a first direction X toward a to-be-attached workpiece 40, adhering a first portion 31 of an adhesive tape 30 to a region of a first wall 41 of the to-be-attached workpiece 40 close to a second wall 42 of the to-be-attached workpiece 40 using a first adhesive tape attaching mechanism 111 of the adhesive tape attaching assembly 11, and adhering a second portion 32 of the adhesive tape 30 to a region of the second wall 42 close to the first wall 41 using a second adhesive tape attaching mechanism 112 of the adhesive tape attaching assembly 11 includes: simultaneously controlling two adhesive tape attaching assemblies 11 to move along the first direction X toward the to-be-attached workpiece 40, adhering the first portions 31 of two adhesive tapes 30 respectively to two regions of the first wall 41 close to the two second walls 42 using two first adhesive tape attaching mechanisms 111 included in the two adhesive tape attaching assemblies 11, and adhering the second portions 32 of the two adhesive tapes 30 respectively to the two second walls 42 using two second adhesive tape attaching mechanisms 112 included in the two adhesive tape attaching assemblies 11.

In some embodiments, the adhesive tape attaching method 400 further includes: controlling the two adhesive tape attaching assemblies 11 to move toward and/or away from each other along a second direction Y, where the second direction Y is perpendicular to the first direction X.

It should be understood that the adhesive tape attaching method 400 of the embodiments of this application may be performed using the adhesive tape attaching device 1 described above, and for brevity, details are not repeated herein.

In the adhesive tape attaching method 400 of the embodiments of this application, by controlling the entire adhesive tape attaching assembly 11 to move toward the to-be-attached workpiece 40, the first adhesive tape attaching mechanism 111 may be used to adhere the first portion 31 of the adhesive tape 30 to the first wall 41, and the second adhesive tape attaching mechanism 112 may be used to adhere the second portion 32 of the adhesive tape 30 to the second wall 42, so that the adhesive tape 30 is adhered to an intersecting region of two intersecting walls of the to-be-attached workpiece 40. In this process, there is no need to flip the to-be-attached workpiece 40, reducing misalignment of the adhesive tape 30 caused by flipping the to-be-attached workpiece 40; and there is also no need to use multiple adhesive tape attaching devices to work alternately and cooperatively, simplifying the overall structural complexity of the system for assembling battery cells 20.

Although this application has been described with reference to preferred embodiments, various improvements can be made to this application without departing from the scope of this application, and equivalents can be used for substituting the components described herein. In particular, as long as there is no structural conflict, the technical features mentioned in the embodiments can be combined in any manner. This application is not limited to the specific embodiments disclosed herein, but includes all technical solutions falling within the scope of the claims.

## Claims

1. An adhesive tape attaching device, **characterized by** comprising:
an adhesive tape attaching assembly (11), wherein the adhesive tape attaching assembly (11) comprises a first adhesive tape attaching mechanism (111) and a second adhesive tape attaching mechanism (112); and
a control assembly (12), configured to control the adhesive tape attaching assembly (11) to move along a first direction toward a to-be-attached workpiece (40), wherein the first adhesive tape attaching mechanism (111) is configured to adhere a first portion (31) of an adhesive tape (30) to a region of a first wall (41) of the to-be-attached workpiece (40) close to a second wall (42) of the to-be-attached workpiece (40), the second adhesive tape attaching mechanism (112) is configured to adhere a second portion (32) of the adhesive tape (30) to a region of the second wall (42) close to the first wall (41), the first portion (31) is connected to the second portion (32), and the first wall (41) intersects with the second wall (42).

2. The adhesive tape attaching device according to claim 1, **characterized in that** the first adhesive tape attaching mechanism (111) comprises a floating structure (1111) and a first adhesive tape adsorbing structure (1112) connected to each other, wherein the floating structure (1111) extends along the first direction, and the first adhesive tape adsorbing structure (1112) is located on a side of the floating structure (1111) close to the to-be-attached workpiece (40); and
the first adhesive tape adsorbing structure (1112) is configured to adsorb the first portion (31), and the floating structure (1111) is configured to be gradually compressed during the movement of the first adhesive tape attaching mechanism (111) along the first direction toward the to-be-attached workpiece (40).

3. The adhesive tape attaching device according to claim 2, **characterized in that** the floating structure (1111) is configured to be gradually reset during movement of the first adhesive tape attaching mechanism (111) along the first direction away from the to-be-attached workpiece (40).

4. The adhesive tape attaching device according to claim 2 or 3, **characterized in that** the floating structure (1111) comprises a first spring (1113) extending along the first direction.

5. The adhesive tape attaching device according to any one of claims 2 to 4, **characterized in that** the first adhesive tape adsorbing structure (1112) is a hollow structure, a surface of the first adhesive tape adsorbing structure (1112) facing the first wall (41) is a first adhesive tape adsorbing surface (1114), the first adhesive tape adsorbing surface (1114) is provided with a first adsorption hole (1115), and the first adsorption hole (1115) is used for adsorbing the first portion (31).

6. The adhesive tape attaching device according to claim 5, **characterized in that** the first adhesive tape adsorbing surface (1114) is parallel to the first wall (41); and/or,
the first adhesive tape adsorbing surface (1114) is perpendicular to the first direction.

7. The adhesive tape attaching device according to any one of claims 1 to 6, **characterized in that** the second adhesive tape attaching mechanism (112) comprises a rotating structure (1121) and a second adhesive tape adsorbing structure (1122), wherein the second adhesive tape adsorbing structure (1122) is located on a side of the rotating structure (1121) close to the to-be-attached workpiece (40), the rotating structure (1121) is rotatably connected to the second adhesive tape adsorbing structure (1122), and the second adhesive tape adsorbing structure (1122) is configured to adsorb the second portion (32).

8. The adhesive tape attaching device according to claim 7, **characterized in that** the second adhesive tape adsorbing structure (1122) is a hollow structure, wherein a surface of the second adhesive tape adsorbing structure (1122) facing the to-be-attached workpiece (40) is a second adhesive tape adsorbing surface (1125), the second adhesive tape adsorbing surface (1125) is provided with a second adsorption hole (1128), and the second adsorption hole (1128) is used for adsorbing the second portion (32).

9. The adhesive tape attaching device according to claim 8, **characterized in that** a surface of the second adhesive tape adsorbing structure (1122) close to the first adhesive tape attaching mechanism (111) and intersecting with the second adhesive tape adsorbing surface (1125) is an adhesive tape attaching surface (1126), wherein
the second adhesive tape adsorbing surface (1125) is configured to adsorb the second portion (32) to the to-be-attached workpiece (40), and the adhesive tape attaching surface (1126) is configured to adhere the second portion (32) to the second wall (42).

10. The adhesive tape attaching device according to claim 9, **characterized in that** the second adhesive tape adsorbing structure (1122) comprises a protruding structure (1127) protruding toward the first adhesive tape attaching mechanism (111), and the adhesive tape attaching surface (1126) comprises a surface of the protruding structure (1127) facing the first adhesive tape attaching mechanism (111).

11. The adhesive tape attaching device according to claim 9 or 10, **characterized in that** the adhesive tape attaching surface (1126) is an arched surface.

12. The adhesive tape attaching device according to any one of claims 8 to 11, **characterized in that** the second adhesive tape adsorbing surface (1125) is parallel to the first wall (41); and/or,
the second adhesive tape adsorbing surface (1125) is perpendicular to the first direction.

13. The adhesive tape attaching device according to any one of claims 1 to 12, **characterized in that** the adhesive tape attaching device comprises two adhesive tape attaching assemblies (11), wherein the control assembly (12) is configured to simultaneously control the two adhesive tape attaching assemblies (11) to move along the first direction toward the to-be-attached workpiece (40), and the to-be-attached workpiece (40) comprises two second walls (42) intersecting with and disposed opposite the first wall (41);
the two first adhesive tape attaching mechanisms (111) comprised in the two adhesive tape attaching assemblies (11) are configured to adhere the first portions (31) of two adhesive tapes (30) respectively to two regions of the first wall (41) close to the two second walls (42); and
the two second adhesive tape attaching mechanisms (112) comprised in the two adhesive tape attaching assemblies (11) are configured to adhere the second portions (32) of the two adhesive tapes (30) respectively to the two second walls (42).

14. The adhesive tape attaching device according to claim 13, **characterized in that** the control assembly (12) is further configured to:
control the two adhesive tape attaching assemblies (11) to move toward and/or away from each other along a second direction, wherein the second direction is perpendicular to the first direction.

15. An adhesive tape attaching method, **characterized by** comprising:
controlling an adhesive tape attaching assembly (11) to move along a first direction toward a to-be-attached workpiece (40), adhering a first portion (31) of an adhesive tape (30) to a region of a first wall (41) of the to-be-attached workpiece (40) close to a second wall (42) of the to-be-attached workpiece (40) using a first adhesive tape attaching mechanism (111) of the adhesive tape attaching assembly (11), and adhering a second portion (32) of the adhesive tape (30) to a region of the second wall (42) close to the first wall (41) using a second adhesive tape attaching mechanism (112) of the adhesive tape attaching assembly (11), wherein the first portion (31) is connected to the second portion (32), and the first wall (41) intersects with the second wall (42).

16. The adhesive tape attaching method according to claim 15, **characterized in that** the adhering a first portion (31) of an adhesive tape (30) to a region of a first wall (41) of the to-be-attached workpiece (40) close to a second wall (42) of the to-be-attached workpiece (40) using a first adhesive tape attaching mechanism (111) of the adhesive tape attaching assembly (11) comprises:
compressing a floating structure (1111) of the first adhesive tape attaching mechanism (111), and keeping a first adhesive tape adsorbing structure (1112) of the first adhesive tape attaching mechanism (111) to abut against the first wall (41) to adhere the first portion (31) to the first wall (41).

17. The adhesive tape attaching method according to claim 15 or 16, **characterized in that** the adhering a second portion (32) of the adhesive tape (30) to a region of the second wall (42) close to the first wall (41) using a second adhesive tape attaching mechanism (112) of the adhesive tape attaching assembly (11) comprises:
rotating a second adhesive tape adsorbing structure (1122) of the second adhesive tape attaching mechanism (112) using a rotating structure (1121) of the second adhesive tape attaching mechanism (112) to adhere the second portion (32) to the second wall (42).

18. The adhesive tape attaching method according to any one of claims 15 to 17, **characterized in that** the adhesive tape attaching method further comprises:
controlling the adhesive tape attaching assembly (11) to move along the first direction away from the to-be-attached workpiece (40).

19. The adhesive tape attaching method according to any one of claims 15 to 18, **characterized in that** the to-be-attached workpiece (40) comprises two second walls (42) intersecting with and disposed opposite the first wall (41); and
the controlling an adhesive tape attaching assembly (11) to move along a first direction toward a to-be-attached workpiece (40), adhering a first portion (31) of an adhesive tape (30) to a region of a first wall (41) of the to-be-attached workpiece (40) close to a second wall (42) of the to-be-attached workpiece (40) using a first adhesive tape attaching mechanism (111) of the adhesive tape attaching assembly (11), and adhering a second portion (32) of the adhesive tape (30) to a region of the second wall (42) close to the first wall (41) using a second adhesive tape attaching mechanism (112) of the adhesive tape attaching assembly (11) comprises:
simultaneously controlling two adhesive tape attaching assemblies (11) to move along the first direction toward the to-be-attached workpiece (40), adhering the first portions (31) of two adhesive tapes (30) respectively to two regions of the first wall (41) close to the two second walls (42) using two first adhesive tape attaching mechanisms (111) comprised in the two adhesive tape attaching assemblies (11), and adhering the second portions (32) of the two adhesive tapes (30) respectively to the two second walls (42) using two second adhesive tape attaching mechanisms (112) comprised in the two adhesive tape attaching assemblies (11).

20. The adhesive tape attaching method according to claim 19, **characterized in that** the adhesive tape attaching method further comprises:
controlling the two adhesive tape attaching assemblies (11) to move toward and/or away from each other along a second direction, wherein the second direction is perpendicular to the first direction.
